# EUROPÄISCHE PATENTANMELDUNG

(11) **EP 1 602 267 A2**
(43) Veröffentlichungstag der Anmeldung: **07.12.2005**
(21) Anmeldenummer: 05010408.2
(22) Anmeldetag: 13.05.2005
(51) Int. Cl.: A01B 69/00

(54) **Routenplanungssystem für landwirtschaftliche Arbeitsmaschinen**

(30) Priorität: 03.06.2004 DE 102004017347
(71) Anmelder: CLAAS Selbstfahrende Erntemaschinen GmbH, 33428 Harsewinkel (DE)
(72) Erfinder: Diekhans, Noebert, Dr., 33335 Gütersloh (DE); Huster, Jochen, 33330 Gütersloh (DE); Brunnert, Andreas, 33129 Delbrück (DE)

(57) **Zusammenfassung**

Die Erfindung betrifft ein Routenplanungssystem (1) für landwirtschaftliche Arbeitsmaschinen (3, 4), wobei der landwirtschaftlichen Arbeitsmaschine (3, 4) eine definierte Arbeitsbreite (AB) zur Generierung von Fahrtrouten (14, 14') in einem Territorium (21) zugeordnet ist und das Routenplanungssystem (1) eine dynamische Anpassung der geplanten Fahrtroute (14, 14') umfasst. Hierdurch wird sichergestellt, dass die abzuarbeitende Fahrtroute (14, 14') flexibel an sich ändernde äußere Bedingungen, wie etwa das Umfahren von Hindernissen anpassbar ist, sodass der Betreiber (5) der landwirtschaftlichen Arbeitsmaschine (3, 4) weitgehend von aufwendigen Lenkmanövern entlastet wird.

## Beschreibung

Die Erfindung betrifft ein Routenplanungssystem für landwirtschaftliche Arbeitsmaschinen nach dem Oberbegriff der Ansprüche 1 und 9.

Bereits aus der EP 0 660 660 war es bekannt, landwirtschaftliche Arbeitsmaschinen mit sogenannten GPS-Systemen auszurüsten, um die Position der landwirtschaftlichen Erntemaschine auf einer zu bearbeitenden Fläche zu registrieren. Dabei wurde von dem Betreiber der Maschine die abzufahrende Route bestimmt und das mit einer Aufzeichnungseinheit in Wirkverbindung stehende GPS-System lieferte die Positionsdaten des Fahrzeugs, die dann in der Aufzeichnungseinheit zur elektronischen Abbildung des zurückgelegten Fahrtweges herangezogen wurden. Derartige Systeme bildeten einen ersten Schritt in Richtung der Aufzeichnung von Fahrtrouten, wobei es hier zunächst nur um die Aufzeichnung von Fahrtrouten an sich ging. Eine vorherige Planung von abzuarbeitenden Fahrtrouten war mit derartigen Systemen nicht möglich.

Den Gedanken der Aufzeichnung von Fahrtrouten konsequent weiterverfolgend ermöglichen Systeme nach der EP 0 821 296 die Generierung von Fahrtrouten in Abhängigkeit von äußeren Geometrien zu bearbeitender landwirtschaftlicher Nutzflächen. Der wesentliche Vorteil dieser Systeme ist, dass erstmals vorab Fahrtrouten unter Berücksichtigung diverser Optimierungskriterien ermittelbar sind, die dann im einfachsten Fall selbsttätig von der landwirtschaftlichen Arbeitsmaschine abgearbeitet werden. Aufgrund dessen, dass hier auf der Basis einfacher geometrischer Zusammenhänge vorab Fahrstrecken definiert wurden, sind solche Systeme nur in der Lage die einmal vordefinierte Fahrtroute abzuarbeiten, wobei Abweichungen von dieser Fahrtroute entweder angezeigt oder unmittelbar korrigiert werden.

Es ist deshalb Aufgabe der Erfindung ein Routenplanungssystem vorzuschlagen, welches flexibel auf sich ändernde äußere Bedingungen reagieren kann.

Diese Aufgabe wird erfindungsgemäß durch die kennzeichnenden Merkmale der Ansprüche 1 oder 9 gelöst.

Indem das Routenplanungssystem eine dynamische Anpassung der geplanten Fahrtroute zulässt, wird sichergestellt, dass die abzuarbeitende Fahrtroute flexibel an sich ändernde äußere Bedingungen wie etwa das Umfahren von Hindernissen anpassbar ist, sodass der Betreiber der landwirtschaftlichen Arbeitsmaschine vollständig von Rückführmanövern der Arbeitsmaschine auf die ursprünglich ermittelte Fahrtroute entlastet wird. Zudem hat dies den Vorteil, dass der Betreiber jederzeit die Bearbeitungsreihenfolge auf einem bestimmten Territorium ändern kann und das Routenplanungssystem automatisch eine diese Änderung berücksichtigende neue Fahrtroute ermittelt, die dann von der Arbeitsmaschine selbsttätig abgearbeitete werden kann.

Da der Betreiber jederzeit beliebig in die Lenkung der Arbeitsmaschine eingreifen kann, wird eine dynamische Anpassung der Routenplanung im einfachsten Fall dadurch erreicht, dass die Fahrtroute in Abhängigkeit von der Maschinen-Ist-Position und der Maschinen-Ist-Ausrichtung dynamisch angepasst wird.

Das Verfahren einer dynamischen Fahrtroutenanpassung wird um so präziser arbeiten je häufiger die Maschinen-Ist-Position und die Maschinen-Ist-Ausrichtung abgefragt werden. In vorteilhafter Weiterbildung der Erfindung wird deshalb eine permanent arbeitende dynamische Fahrtroutenanpassung vorgeschlagen.

Im einfachsten Fall wird die ermittelte Fahrtroute in an sich bekannter Weise durch eine Vielzahl von Fahrstrecken gebildet, wobei jede dieser Fahrstrecken nach Optimierungskriterien bestimmbar ist und zudem die Reihenfolge ihrer Abarbeitung von diesen oder anderen Optimierungskriterien definiert wird.

Um einerseits die Effizienz des Bearbeitungsprozesses zu erhöhen, und andererseits eine bodenschonende minimale Überrollung des zu überfahrenden Territoriums zu gewährleisten, können die von dem Routenplanungssystem zu berücksichtigenden Optimierungskriterien insbesondere "die Berücksichtigung der kürzesten Bearbeitungsstrecke" oder analog "die Berücksichtigung der kürzesten Bearbeitungszeit" sein. In unmittelbarem Zusammenhang mit diesen Optimierungskriterien steht auch das weitere Optimierungskriterium "Reduzierung unproduktiver Hilfszeiten". Dabei geht es vor allem darum, möglichst kurze Wege zwischen aufeinanderfolgend abzuarbeitenden Fahrstrecken zu realisieren, und die Fahrwege zwischen der landwirtschaftlichen Arbeitsmaschine und beispielsweise einem Überladefahrzeug zu minimieren. Zudem wird der Prozess der Routenplanung selbst dadurch optimiert, dass das Routenplanungssystem bereits abgearbeitete und hinterlegte Fahrtrouten und Bearbeitungsabläufe wiedererkennt und bei der Generierung neuer Fahrtrouten in dem entsprechenden Territorium unmittelbar auf diese zurückgreift.

Um dem Betreiber der landwirtschaftlichen Arbeitsmaschine größtmöglichen Einfluss auf das Routenplanungssystem einzuräumen, ist in einer weiteren vorteilhaften Ausgestaltung der Erfindung vorgesehen, dass der Betreiber die vom Routenplanungssystem zur Abarbeitung vorgewählte Fahrstrecke verwerfen und eine andere der zuvor ermittelten Fahrstrecken auswählen oder eine beliebige, selbstbestimmte Fahrtroute einschlagen kann. In vorteilhafter Weiterbildung der Erfindung ist das Routenplanungssystem so ausgestaltet, dass bei Wahl einer selbstbestimmten Fahrstrecke das Routenplanungssystem auf Grundlage dieser durch den Betreiber eingeschlagenen Fahrtroute eine neue, aus Fahrstrecken zusammengesetzte Fahrtroute ermittelt.

Indem das Routenplanungssystem so strukturiert ist, dass es Abarbeitungsstrategien ermitteln kann, sind die Voraussetzungen dafür geschaffen, dass das Routenplanungssystem die Fahrtrouten und die damit verbundenen Arbeitsabläufe einer Vielzahl von landwirtschaftlichen Arbeitsmaschinen untereinander koordinieren kann. Im einfachsten Fall kann die Abarbeitungsstrategie dadurch gebildet werden, dass die aus parallelen Fahrstrecken und Wendebögen bestehenden Fahrtrouten verschiedener Fahrzeuge so aufeinander abgestimmt sind, dass die zusammenarbeitenden Arbeitsmaschinen stets annährend die gleichen Fahrspuren benutzen und Wendevorgänge stets in etwa den selben Bereichen durchgeführt werden. Weiter kann die Abarbeitungsstrategie die Kinematik der landwirtschaftlichen Arbeitsmaschinen und die Geometrie der zu bearbeitenden Flächen berücksichtigen. Dies hat insbesondere den Vorteil, dass beispielsweise beim Zusammenwirken von Mähdreschern mit einem oder mehreren Abtankfahrzeugen sichergestellt werden kann, dass die Abtankfahrzeuge so positioniert sind, dass die Mähdrescher zur Überladung der Körner bequem im Bereich der Abtankfahrzeuge positioniert werden können, d.h. die Abtankfahrzeuge müssen in Abhängigkeit vom Wendekreis der Mähdrescher und der Länge der jeweiligen Abtankeinrichtungen ausreichend von befahrbarem Territorium umgeben sein. Weiter kann die zu ermittelnde Abarbeitungsstrategie von Kundenwünschen abhängig erstellt werden, wobei der Kunde in der Regel Bearbeitungsreihenfolgen, die Einhaltung bestimmter Parameter, wie etwa die Einhaltung von Kornverlusten bei der Getreideernte, und die Einhaltung von Bearbeitungszeiten, etwa um den Erntevorgang vor dem Aufziehen einer Schlechtwetterfront beendet zu haben, vorgibt.

Indem das Routenplanungssystem zudem so ausgeführt ist, dass es Fahrtrouten und Abarbeitungsstrategien wiedererkennt, wird der erforderliche Rechenaufwand zur Ermittlung der die Fahrtroute bildenden Fahrstrecken erheblich reduziert. In diesem Zusammenhang wird ein besonders effizientes Routenplanungssystem dann geschaffen, wenn das Routenplanungssystem auf hinterlegte Fahrstrategien zurückgreifen kann, die entweder das Zusammenspiel gleichzeitig oder aufeinanderfolgend in dem jeweiligen Territorium wirkender Arbeitsmaschinen und deren optimierte Fahrtrouten in dem jeweiligen Territorium definieren.

Zur Vereinfachung der Berechnungsvorgänge und der visuellen Darstellung wird zur Ermittlung der Fahrtroute in dem Routenplanungssystem eine sogenannte Masterlinien definiert, wobei die weiteren Fahrstrecken um die Arbeitsbreite oder ein Vielfaches der Arbeitsbreite der landwirtschaftlichen Arbeitsmaschine versetzt zu dieser Masterlinie abgebildet werden. Mit den gleichen Effekten wird die geradlinig oder gekrümmt ausgeführte Masterlinie in vorteilhafter Weiterbildung der Erfindung über zumindest zwei zueinander beabstandete Wegpunkte definiert, wobei die virtuelle Verlängerung der Masterlinie durch diese zwei zueinander beabstandeten Wegpunkte als Leitlinie fungiert, nach deren Ausrichtung die landwirtschaftliche Arbeitsmaschine auf dem zu bearbeitenden Territorium geführt wird. Im einfachsten Fall definiert der Betreiber der landwirtschaftlichen Arbeitsmaschine die Masterlinie durch Eingabe von Koordinaten.

Zur Reduzierung des Speicherbedarfs und der Beschleunigung des Rechenprozesses zur Ermittlung der Fahrtroute sind in dem Fahrtroutenplanungssystem Algorithmen hinterlegt, die die zur Darstellung gekrümmter Masterlinien erforderlichen Wegpunkte unter Berücksichtigung der notwendigen Genauigkeiten reduzieren.

Zur Erreichung übersichtlich strukturierter Fahrtrouten und reduzierter Lenkvorgänge an der landwirtschaftlichen Arbeitsmaschine ist es von Vorteil, wenn das erfindungsgemäße Routenplanungssystem zunächst Fahrstrecken definiert, die die Form der Außenkontur des zu bearbeitenden Territoriums oder der zu umfahrenden Hindernisse nachbilden und nachfolgend annähernd parallel zueinander verlaufende Fahrstrecken generiert, wobei die Länge der Fahrstrecken der ermittelten Fahrtroute im wesentlichen durch die Außenkontur des abzuarbeitenden Territoriums oder der zu umfahrenden Hindernisse bestimmt wird.

Damit die landwirtschaftlichen Arbeitsmaschinen am Ende der jeweiligen Fahrstrecken einen Wendevorgang zum Erreichen der nächsten abzuarbeitenden Fahrstrecke durchführen können, bei dem noch unbearbeitete Flächen oder auf ihnen wachsender Pflanzenbestand unberührt bleiben, wird in einer weiteren vorteilhaften Ausgestaltung der Erfindung eine virtuelle Verlängerung der Fahrstrecken in ihren Endbereichen vorgeschlagen. Dies hat insbesondere den Vorteil, dass die landwirtschaftliche Arbeitsmaschine entsprechend weit aus dem Bestand herausgeführt wird, bevor es zum Einleiten des Wendevorganges kommt.

Damit der Betreiber der landwirtschaftlichen Arbeitsmaschine unmittelbar Einfluss auf die Reihenfolge der Abarbeitung der von dem Routenplanungssystem ermittelten Fahrstrecken nehmen kann, wird die von den Fahrstrecken gebildete Fahrtroute dem Betreiber zumindest in den Endbereichen der Fahrstrecken visuell angezeigt. Entscheidet sich der Betreiber für eine andere als von dem Routenplanungssystem zur nächstfolgenden Abarbeitung vorgeschlagenen Fahrstrecke ermittelt das Routenplanungssystem selbsttätig die zur Erreichung der gewählten Fahrtsrecke erforderliche Wendekurve. Dies hat insbesondere den Vorteil, dass der Fahrer weiterhin von zum Teil schwierigen Lenkvorgängen im Wendebereich entlastet wird.

Im einfachsten Fall wird die Auswahl der nachfolgend abzuarbeitenden Fahrstrecke durch Betätigung eines sogenannten Touch-Screen-Monitors realisiert.

In an sich bekannter Weise hat der Betreiber der landwirtschaftlichen Arbeitsmaschine auch die Möglichkeit die von dem Routenplanungssystem ermittelten Fahrstrecken durch geeignete Eingabemittel zu verschieben, so dass beispielsweise GPS-Ungenauigkeiten ausgeglichen werden können.

Weitere vorteilhafte Ausführungen sind Gegenstand weiterer Unteransprüche und werden nachfolgend an Hand eines in mehreren Figuren dargestellten Ausführungsbeispiels beschrieben. Es zeigen:
- Fig. 1: die schematische Darstellung des erfindungsgemäßen Routenplanungssystems
- Fig. 2: ein in Fahrstrecken unterteiltes abzuarbeitendes Territorium
- Fig. 3: ein Ausführungsbeispiel des erfindungsgemäßen Routenplanungssystems
- Fig. 4: ein weiteres Ausführungsbeispiel des erfindungsgemäßen Routenplanungssystems
- Fig. 5: das erfindungsgemäße Routenplanungssystem in Flussdiagrammdarstellung

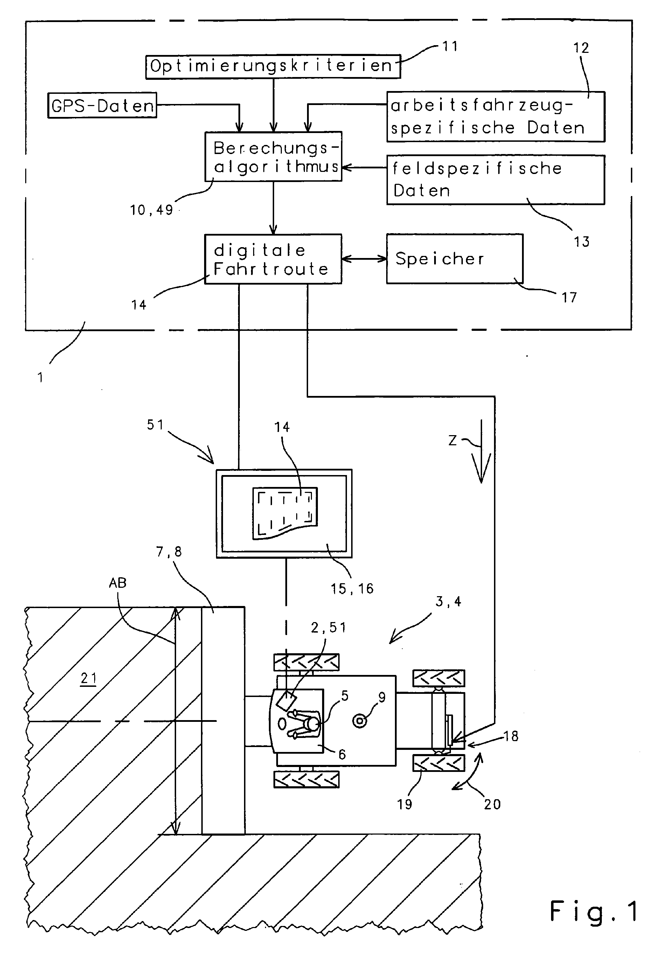

Fig. 1 zeigt eine schematische Darstellung des bereits aus der EP 0 821 296 bekannt gewordenen Routenplanungssystems 1, welches in eine Rechen- und Anzeigeeinheit 2 einer als Mähdrescher 3 ausgeführten landwirtschaftlichen Arbeitsmaschine 4 integriert ist. Die Rechen- und Anzeigeeinheit 2 ist in Sicht- und Bedienweite zu dem Betreiber 5 des Mähdreschers 3 in der Fahrerkabine 6 angeordnet. Frontseitig ist dem Mähdrescher 3 ein beispielsweise als Getreideschneidwerk 7 ausgeführtes Vorsatzgerät 8 zugeordnet, dessen Breite die Arbeitsbreite AB des Mähdreschers 3 bestimmt. Zudem verfügt die landwirtschaftliche Arbeitsmaschine 4 über eine sogenannte GPS-Antenne 9 zum Empfang von Positionskoordinaten via GPS. Gemäß der strichpunktiert eingefassten Vergrößerung in Fig. 1 umfasst das Routenplanungssystem ein oder mehrere Berechnungsalgorithmen 10 die aus den von der GPS-Antenne 9 empfangenen GPS-Signalen in an sich bekannter Weise Positionskoordinaten der landwirtschaftlichen Arbeitsmaschine 4 generieren. Unter Berücksichtigung von noch näher zu erläuternden Optimierungskriterien 11, arbeitsfahrzeugspezifischen Daten 12 und feldspezifischen Daten 13 generieren die Bearbeitungsalgorithmen 10 digitalisierte Fahrtrouten 14, die im einfachsten Fall über eine als Monitor 15 ausgeführte Anzeigeneinheit 16 dem Betreiber 5 in der Fahrerkabine 6 angezeigt werden. Zudem können derartige Routenplanungssysteme 1 so ausgeführt sein, dass die ermittelten Fahrtrouten 14 in einer Speichereinheit 17 wiederholt abrufbar hinterlegt sind. Zudem ist es bekannt, aus den ermittelten Fahrtrouten 14 Steuersignale Z abzuleiten, die unmittelbar in Abhängigkeit von der Gestalt der Fahrtrouten 14 eine Beeinflussung der Lenkung 18 der landwirtschaftlichen Arbeitsmaschine 4 in der Weise bewirken, dass die gelenkten Räder 19 je nach Fahrtroute 14 eine Auslenkung 20 erfahren.

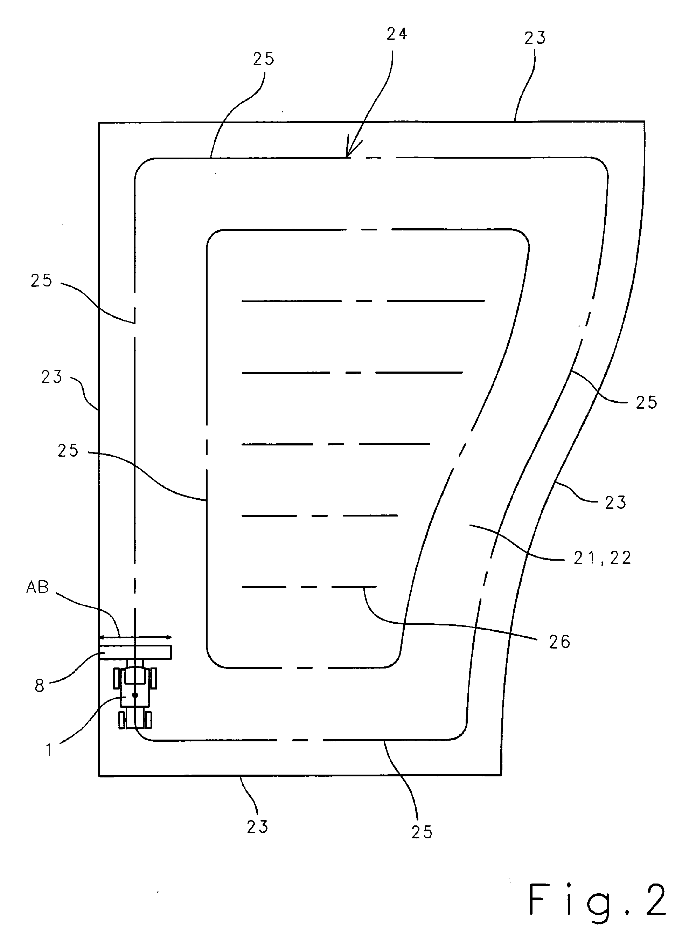

In Fig. 2 ist nun ein von der als Mähdrescher 3 ausgeführten landwirtschaftlichen Arbeitsmaschine 4 zu überfahrendes Territorium 21, nämlich ein abzuerntendes Getreidefeld 22, dargestellt. Das beispielhaft gewählte Getreidefeld 22 weist geradlinig und gekrümmt ausgeführte Außenkonturen 23 auf. Die geographischen Daten dieser Außenkonturen 23 können von dem Mähdrescher 3 selbst in der Weise ermittelt werden, dass der Betreiber 5 den Mähdrescher 3 entlang dieser Außenkonturen 23 führt, wobei während dieser Fahrt das Routenplanungssystem 1 unter Nutzung der GPS-Signale eine erste Fahrtroute 24 generiert. Im einfachsten Fall definiert das Routenplanungssystem 1 diese Fahrtroute 24 in einer Position die etwa der Mitte der Arbeitsbreite AB des Vorsatzgerätes 8 entspricht, wobei die Reproduktion der Außenkontur 23 des überfahrenen Territoriums 21 durch Aneinanderreihung einer Vielzahl von Fahrstrecken 25 realisiert wird. In an sich bekannter Weise können derartige Routenplanungssysteme 1 unter Berücksichtigung der in Fig. 1 dargestellten Parameter, wie etwa verschiedenste Optimierungskriterien 11 sowie arbeitsfahrzeug- und feldspezifische Daten 12, 13 weitere Fahrstrecken 25, 26 generieren, die im einfachsten Fall im Wesentlichen parallel zueinander angeordnet sind und entweder die relativ komplizierte Außenkontur 23 nachbilden oder geradlinig ausgeführt sind. Damit eine vollständige Bearbeitung des Territoriums 21 gewährleistet ist, entsprechen die Abstände zwischen benachbarten Fahrstrecken 25, 26 in etwa der Arbeitsbreite AB des Vorsatzgerätes 8.

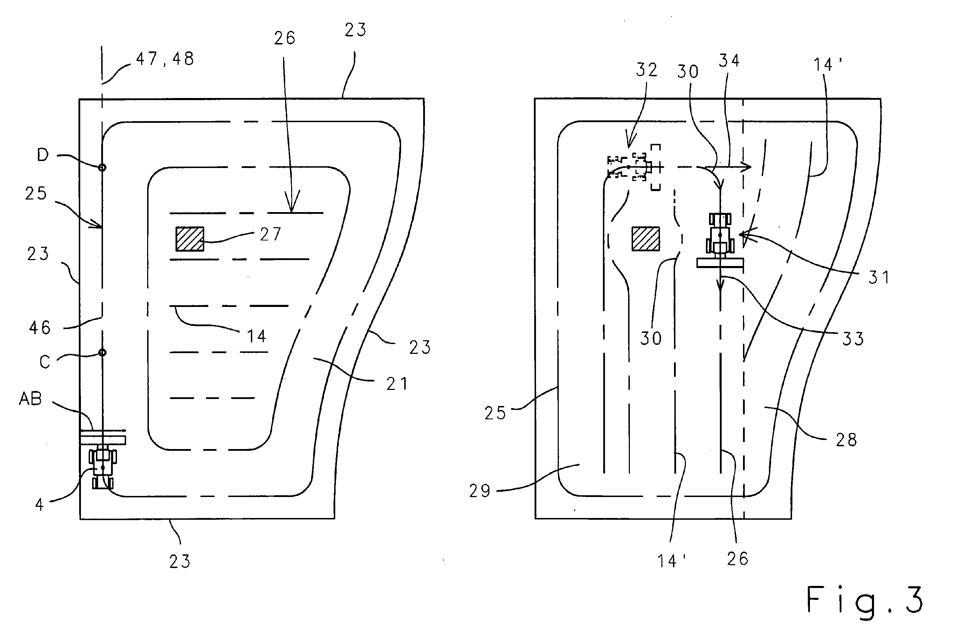

Gemäß Fig. 3 kann das zu überfahrende Territorium 21 von einem oder mehreren Hindernissen 27 durchsetzt sein, die von der landwirtschaftlichen Arbeitsmaschine 4 umfahren werden müssen. Zudem kann der Betreiber 5 beispielweise entscheiden, die von dem Routenplanungssystem 1 generierte Fahrtroute 14 dadurch zu ändern, dass er eine Aufteilung des zu bearbeitenden Territoriums 21 vornimmt. Dies kann im einfachsten Fall in der Weise geschehen, dass der Betreiber 5 in die Steuerung der landwirtschaftlichen Arbeitsmaschine 4 eingreift und einen manuellen Lenkvorgang einleitet, der beispielsweise dem Zweck dient, dass zu bearbeitende Territorium 21 in erste und zweite Teilflächen 28, 29 zu unterteilen. Häufig entscheidet der Betreiber 5 nach verschiedensten Kriterien subjektiv, welche Bearbeitungsrichtungen und Feldaufteilungen eine effiziente Bearbeitung eines Territoriums 21 ermöglichen. Diese subjektiven Kriterien können beispielsweise die Zerlegung des zu bearbeitenden Territoriums 21 in wenig Lenkmanöver erfordernde einfache, geradlinige Kanten aufweisende geometrische Figuren oder das Umfahren von Hindernissen 27 bzw. von unreifen, zu feuchten oder lagernden Feldfruchtbeständen. Indem der Betreiber 5 in diesen Fällen eine neue Fahrstrecke 30 vorgibt, kann das Routenplanungssystem 1 nicht ohne weiteres auf die bereits ermittelte Fahrtroute 14 zurückgreifen. Hier setzt nun die Erfindung in der Weise an, dass das Routenplanungssystem 1 die Abweichung der Maschine-Ist-Position 31 von der durch die ermittelte Fahrtroute 14 bestimmten Maschinen-Soll-Position 32 sowie die Änderung der Maschinen-Ist-Ausrichtung 33 zur Maschinen-Soll-Ausrichtung 34 erkennt und bezogen auf diese neue Maschinenposition 31, 33 eine neue Fahrtroute 14' ermittelt, wobei die ermittelte neue Fahrtroute 14' bereits bearbeitetes Territorium 21 berücksichtigt. In analoger Weise kann der Betreiber 5 in den Lenkvorgang beim Umfahren von Hindernissen 27 eingreifen. Im dargestellten Ausführungsbeispiel ist aus Vereinfachungsgründen in Fig. 3 der Fall dargestellt, dass der Betreiber 5 den gesamten Lenkvorgang zur Umfahrung des Hindernisses 27 von Hand entlang einer Fahrstrecke 30 bis zum Wiedererreichen der zuvor ermittelten Fahrtroute 14 steuert. Es liegt im Rahmen der Erfindung, dass der Betreiber 5 den Umfahrvorgang einleitet und das Routenplanungssystem 1, ausgehend von dieser Positionsänderung der landwirtschaftlichen Arbeitsmaschine 4, selbsttätig eine neue Fahrtroute 14' ermittelt. Aufgrund dessen, dass das Routenplanungssystem 1 GPS-basiert arbeitet, ist es auch denkbar, dass das Routenplanungssystem 1 auf Informationen bezüglich fest in das zu bearbeitende Territorium 21 integrierter Hindernisse, wie etwa Bäume, zurückgreifen kann und deren Position automatisch bei der Erstellung der Fahrtroute 14, 14' berücksichtigt. Durch diese unmittelbare Reaktion des Routenplanungssystems 1 auf Eingriffe des Betreibers 5 in den Lenkvorgang der landwirtschaftlichen Arbeitsmaschine 4 wird ein dynamisches Routenplanungssystem 1 geschaffen, welches sehr flexibel auf Änderungen der Fahrtroute 14 reagieren kann. Eine weitere Flexibilisierung und hohe Präzision eines solchen Routenplanungssystems 1 wird dann erreicht, wenn das Routenplanungssystem 1 permanent die Maschinen-Ist-Position 31 und die Maschinen-Ist-Ausrichtung 33 ermittelt und in Abhängigkeit von diesen Positionsdaten eine permanente Anpassung der Fahrtroute 14, 14' der landwirtschaftlichen Arbeitsmaschine 4 vornimmt.

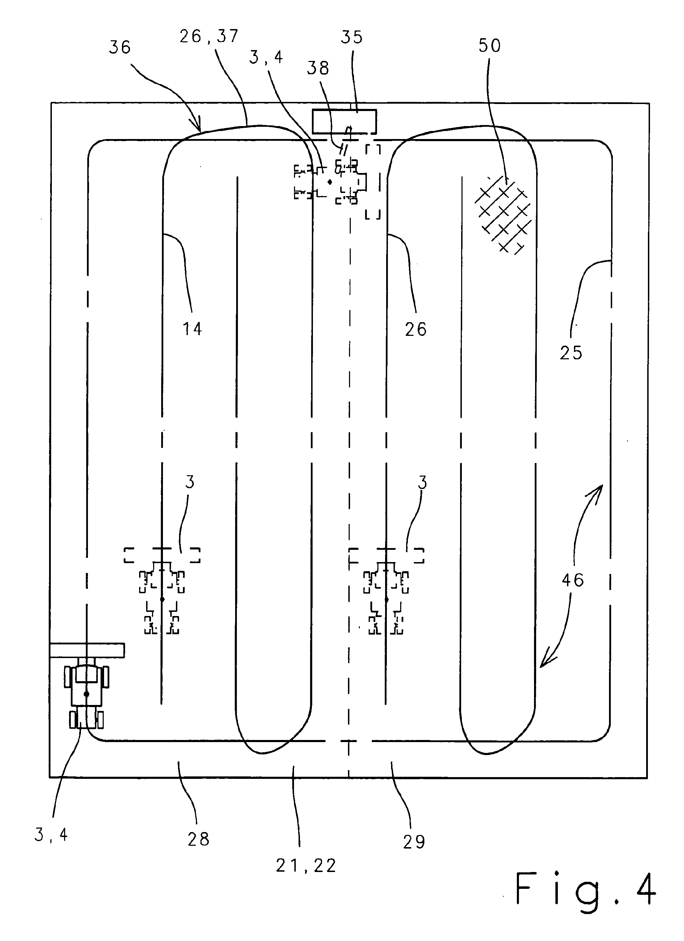

Gemäß vorheriger Ausführungen setzen sich die von dem Routenplanungssystem 1 ermittelten Fahrtrouten 14, 14' aus einer Vielzahl von Fahrstrecken 25, 26 zusammen, wobei die Definition dieser Fahrstrecken 25, 26 nach Länge, Ausrichtung und Abarbeitungsreihenfolge von verschiedensten Optimierungskriterien 11 abhängen kann. In der Regel verläuft beispielsweise das Abernten eines Getreidefeldes 22, wie in Fig. 4 dargestellt, in der Weise, dass ein oder mehrere Mähdrescher 3 das Getreide ernten und das Erntegut auf ein oder mehrere auf dem abzuerntenden Territorium 21 positionierte Überladefahrzeuge 35 verbringen. Dabei ist es von erheblicher Bedeutung, dass die verschiedenen im Einsatz befindlichen Fahrzeuge 4, 35 unter Berücksichtigung einer bodenschonenden Arbeitsweise kurze Fahrstrecken auf dem Territorium 21 zurücklegen. Zudem wird ein effizienter Erntevorgang auch maßgeblich von niedrigen Erntezeiten und damit verbunden, einem niedrigen Anteil an unproduktiver Hilfszeit bestimmt. Deshalb berücksichtigt das Routenplanungssystem 1 in seinen hinterlegten Berechnungsalgorithmen 10 die maßgeblichen Optimierungskriterien 11 "kürzeste Fahrstrecke", "kürzeste Bearbeitungszeit" und/oder "geringer Anteil unproduktiver Hilfszeiten". Im einfachsten Fall werden in den Berechnungsalgorithmen 10 mathematische Zusammenhänge zwischen den GPS-basierten Positionsdaten der landwirtschaftlichen Arbeitsmaschinen 4, der Überladefahrzeuge 35 und der Außenkonturen 23 des zu bearbeitenden Territoriums 21 in Abhängigkeit von wählbaren oder vorgegebenen, im Folgenden noch näher zu erläuternden, arbeitsfahrzeugspezifischen Daten 12 oder feldspezifischen Daten 13 definiert. Ein weiterer und unmittelbar mit den vorgenannten im Zusammenhang stehender Optimierungsparameter 11 betrifft "kurze Hilfsfahrten zwischen aufeinanderfolgend abzuarbeitenden Fahrtsrecken 25, 26". Gemäß Fig. 4 würde der Mähdrescher 3 erhebliche Hilfsfahrten durchführen müssen, wenn die Abarbeitungsreihenfolge der einzelnen Fahrstrecken 26 beidseitig von Außen nach Innen verlaufend vorgenommen würde. Hier kann nun eine Optimierung dahingehend vorgenommen werden, dass die Berechnungsalgorithmen 10 eine optimierte Abarbeitungsreihenfolge ermitteln, die beispielsweise darin bestehen kann, dass das durch die quer verlaufenden Fahrstrecken 26 gebildete Territorium 21 zunächst in erste und zweite Teilflächen 28, 29 unterteilt wird und sodann jeder dieser Teilflächen 28, 29 separate Fahrtrouten 14 zugeordnet werden. Ein weiteres Optimierungskriterium 11 kann die "Wiedererkennung und Abarbeitung bereits bekannter Fahrtrouten 14 und Bearbeitungsabläufe" sein. Einerseits wird das zu überfahrende Territorium 21 innerhalb einer Anbau- und Erntephase von unterschiedlichsten landwirtschaftlichen Arbeitsmaschinen 4 überfahren. Zum Anderen wird das jeweilige Territorium 21 jährlich wiederkehrend bearbeitet. In beiden Fällen ist es von Vorteil, wenn der Prozess der Generierung der Fahrtrouten 14 dadurch erheblich abgekürzt werden kann, wenn das Routenplanungssystem 1 so gestaltet ist, dass es Territorien 21 und die zu ihrer Bearbeitung bereits ermittelten früheren Bearbeitungsabläufe und Fahrtrouten 14 wiedererkennt und auf diese zurückgreifen kann. Kurze Fahrstrecken und ein niedriger Anteil an unproduktiver Hilfszeit wird zudem auch dadurch erreicht, dass weitere Optimierungskriterien 11 die "Minimierung der Fahrten zwischen landwirtschaftlicher Arbeitsmaschine 4 und Überladefahrzeug 35" sowie "kurze Vorgewendefahrten 36" sind.

Aufgrund dessen, dass landwirtschaftliche Feldbearbeitungsprozesse in der Regel durch das Zusammenwirken mehrere landwirtschaftlicher Arbeitsmaschinen 4 gekennzeichnet sind, wird dann ein besonders effizientes Routenplanungssystem 1 geschaffen, wenn das Routenplanungssystem 1 über die in ihm hinterlegten Berechnungsalgorithmen 10 in der Lage ist Abarbeitungsstrategien zu generieren. Im einfachsten Fall beschränkt sich die Abarbeitungsstrategie darauf, dass das Routenplanungssystem Fahrstrecken 25, 26 und sogenannte Wendebögen 37 generiert und eine definiert Abarbeitungsreihenfolge der Fahrstrecken 25, 26 und Wendebögen 37 festlegt. In dem in Fig. 4 dargestellten Ausführungsbeispiel könnte beim Einsatz von zwei Mähdreschern 3 die Abarbeitungsstrategie beispielsweise darin bestehen, dass das Routenplanungssystem 1 gemäß der vorherigen Ausführungen zunächst das zu bearbeitende Territorium 21 in erste und zweite Teilflächen 28, 29 unterteilt und sodann jedem Mähdrescher 3 eine Teilfläche 28, 29 zur Bearbeitung zuweist. Die Abarbeitungsstrategie besteht für diesen Fall im Wesentlichen darin, die Anzahl und Position verschiedenster, auf dem jeweiligen Territorium 21 im Einsatz befindlicher landwirtschaftlicher Arbeitsmaschinen 4 zu berücksichtigen. Insbesondere bei der Abarbeitung eines sogenannten Überladevorganges, bei dem der Mähdrescher 3 das von ihm während der Erntefahrt gespeicherte Erntegut an ein Überladefahrzeug 35 übergibt, ist es von besonderer Bedeutung, dass der Mähdrescher 3 auf einfache Weise eine geeignete Überladeposition zum Überladefahrzeug 35 einnehmen kann und Behinderungen mit weiteren, das Überladefahrzeug 35 befüllenden Mähdreschern 3 vermieden werden. Im einfachsten Fall kann dies dadurch sichergestellt werden, dass die von dem Routenplanungssystem 1 ermittelte Abarbeitungsstrategie die Maschinentypabhängigen Maschinenkinematiken, die Geometrie der abzuarbeitenden Territorien 21, insbesondere bei der sogenannten Vorgewendefahrt 36, und gegebenenfalls die Lage von Hindernissen 27 im zu bearbeitenden Territorium 21 berücksichtigt. Die Maschinenkinematiken bilden dabei die arbeitsfahrzeugspezifischen Daten 12, die beispielsweise mögliche Kurvenradien und Lenkwinkel eines Mähdreschers 3, die Geometrie seiner Abtankeinrichtung 38 und die Dimensionierung des Überladefahrzeugs 35 sein können. Die Berücksichtigung der Geometrie des zu bearbeitenden Territoriums 21 ist insbesondere bei dem in Fig. 4 schematisch angedeuteten Überladevorgang von erheblicher Bedeutung, da das bequeme Erreichen einer Überladeposition den Überladevorgang erheblich verkürzt und somit zu einer Verringerung der notwendigen Hüfszeiten führt. Zudem kann die Abarbeitungsstrategie Erntegutbedingungen wie etwa Lagergetreide, fehlender Bewuchs, zu hohe Gutfeuchte berücksichtigen, wobei derartige Informationen zumeist durch den Betreiber 5 der landwirtschaftlichen Arbeitsmaschine 4 an das Routenplanungssystem 1 übermittelt werden. Sowohl die Erntegutbedingungen als auch die Geometrie des abzuarbeitenden Territoriums 21 bilden in dem erfindungsgemäßen Routenplanungssystem 1 die sogenannten feldspezifischen Daten 13. Weiter kann die von dem Routenplanungssystem 1 generierte Abarbeitungsstrategie Kundenwünsche in der Weise berücksichtigen, dass der Kunde beispielsweise zulässige Höchstgrenzen für den Erntegutverlust oder die Bearbeitungszeit vorgibt. Häufig ist es auch der Fall, dass der Kunde aufgrund früherer Erfahrungen eine bestimmte Bearbeitungsreihenfolge bevorzugt, etwa in Bezug auf die Abtrocknung des Erntegutes, die aufgrund verschiedenster äußerer Einflüsse innerhalb des zu bearbeitenden Territoriums 21 sehr unterschiedlich ausgeprägt sein kann. Zudem kann die Abarbeitungsstrategie vollständige Arbeitsabläufe in der Weise vorgeben, dass, während die Mähdrescher 3 das jeweilige Territorium 21 noch abernten bereits nachfolgende Prozesse, wie etwa das Pressen des auf dem Feld abgelegten Strohs oder das Umbrechen der Stoppeln, beginnen.

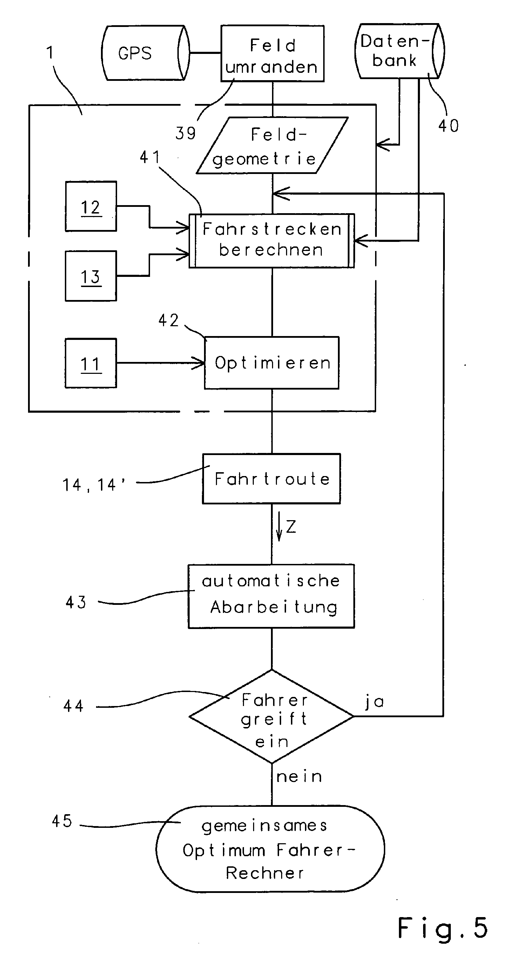

Das in Fig. 1 schematisch dargestellte Verfahren zur Ermittlung der Fahrrouten 14 könnte gemäß der Flussbilddarstellung nach Fig. 5 einfachstenfalls so strukturiert sein, dass der Betreiber 5 der landwirtschaftlichen Arbeitsmaschine 4 in einem ersten Schritt 39 das zu bearbeitende Territorium 21 umrundet, wobei die geographischen Daten der Außenkontur 23 des Territoriums 21 GPS-basiert ermittelt werden. Es liegt im Rahmen der Erfindung, dass die geographischen Daten eines bereits bekannten Territoriums 21 auch aus einer Datenbank 40 unmittelbar an das Routenplanungssystem 1 übermittelbar sind. In dem Routenplanungssystem 1 werden unter Einbeziehung der bereits beschriebenen Berechnungsalgorithmen 10 und unter Berücksichtigung der arbeitsfahrzeugspezfischen sowie feldspezifischen Daten 12, 13 in einem weiteren Abarbeitungsschritt 41 die Fahrstrecken 14, 14' berechnet. Unter Einbeziehung der verschiedenen, zuvor bereits beschriebenen Optimierungskriterien 11 wird in einem weiteren Abarbeitungsschritt 42 in dem Routenplanungssystem 1 eine Optimierung der ermittelten Fahrtrouten 14, 14' vorgenommen, wobei im einfachsten Fall zunächst die ermittelte Fahrtroute 14 automatisch abgearbeitet wird. Wie bereits beschrieben, wird dieser Verfahrensschritt 43 dadurch umgesetzt, dass das Routenplanungssystem 1 Steuersignale Z generiert, die unmittelbar in die Lenkung 18 der landwirtschaftlichen Arbeitsmaschine 4 eingreifen, sodass diese selbsttätig entlang der ermittelten Fahrtroute 14 auf dem zu bearbeitenden Territorium 21 geführt wird. Greift der Betreiber 5 der landwirtschaftlichen Arbeitsmaschine 4 in einem weiteren Abarbeitungsschritt 44 in den Lenkvorgang ein oder verwirft er die ermittelte Fahrtroute 14, ermittelt das erfindungsgemäße Routenplanungssystem 1 eine neue Fahrtroute 14', wobei dann die vorhergehenden Abarbeitungsschritte 41-43 wiederholt durchlaufen werden. Dieser Prozess wiederholt sich immer dann, wenn entweder die ermittelte Fahrtroute 14 verworfen wird oder der Betreiber unmittelbar in die Abarbeitung einer Fahrtroute 14 durch Betätigung der Lenkung 18 der landwirtschaftlichen Arbeitsmaschine 4 eingreift, sodass das erfindungsgemäße Routenplanungssystem 1 letztlich immer eine Fahrtroute 14, 14' ermittelt, die ein Optimum 45 zwischen den Forderungen des Betreibers 5 und der Berücksichtigung verschiedenster Optimierungskriterien 11 bildet.

Damit nun die generierten Fahrtrouten 14, 14' sowohl elektronisch einfach weiterverarbeitbar sind als auch übersichtlich graphisch dargestellt werden können, werden die Fahrtrouten 14, 14' in dem Routenplanungssystem 1 durch sogenannte, in Fig. 3, linke Darstellung angedeutete Masterlinien 46 beschrieben, wobei die Masterlinien 46 benachbarter Fahrstrecken 25, 26 um die Arbeitsbreite AB der landwirtschaftlichen Arbeitsmaschine 4 oder ein Vielfaches hiervon zueinander versetzt angeordnet sind. Damit wird das durch seine Außenkonturen 23 definierte, zu bearbeitende Territorium 21 durch eine Vielzahl zueinander beabstandeter Masterlinien 46 beschrieben, wobei die Masterlinien 46 je nach Gestalt der Außenkonturen 23 ebenfalls geradlinig oder gekrümmt ausgeführt sein können. Damit die Masterlinien 46 in der Lage sind, die ermittelte Fahrtroute 14, 14' hinreichend genau nachzubilden, um als Leitgröße zur selbsttätigen Beeinflussung der Lenkung 18 der landwirtschaftlichen Arbeitsmaschine 4 geeignet zu sein, werden die Masterlinien 46 stets durch zwei zueinander beabstandete Wegpunkte C, D definiert, wobei eine durch diese Wegpunkte C, D verlaufende virtuelle Verlängerung 47 der Masterlinie 46 als Leitlinie 48 dient. Da eine genaue Abbildung gekrümmter Fahrstrecken 25, 26 eine erhebliche Anzahl von Wegpunkten C, D erfordert, dies aber zu erheblichen Rechenaufwand führt ist in einer weiteren vorteilhaften Ausgestaltung der Erfindung vorgesehen, dass dem Routenplanungssystem 1 weitere Berechnungsalgorithmen 49 zugeordnet sind, die in Abhängigkeit von vordefinierten oder vordefinierbaren Genauigkeitsgrenzen eine Reduzierung der Wegpunkte C, D kurvenförmiger Wegstrecken 25, 26 vornehmen, sodass die letztlich generierte Fahrtroute 14, 14' hinreichend genau das von seinen Außenkonturen 23 definierte Territorium 21 abbilden. Damit die landwirtschaftliche Arbeitsmaschine 4 während der Durchführung einer Vorgewendefahrt 36 nicht in Kontakt mit unbearbeitetem Bestand 50 gelangt, werden die die Fahrtroute 14, 14' bildenden Fahrstrecken 25, 26, wie in Fig. 3 dargestellt, im Bereich der Vorgewendefahrt 36 virtuell verlängert, sodass die landwirtschaftliche Arbeitsmaschine 4 vor der Abarbeitung des jeweiligen Wendebogens 37 zunächst entsprechend weit aus dem Bestand 50 herausbewegt wird. Damit der Betreiber 5 der landwirtschaftlichen Arbeitsmaschine 4 unmittelbar Einfluss auf die Abarbeitungsreihenfolge der die Fahrtroute 14, 14' bildenden Fahrstrecken 25, 26 nehmen kann, werden diese dem Betreiber 5 mittels der bereits beschriebenen Anzeigeeinheit 2 visuell angezeigt. Dabei können die einzelnen Fahrstrecken 25, 26 entweder permanent oder nur in bestimmten Abschnitten, wie etwa im Bereich der Vorgewendefahrt 36 anzeigbar sein. Damit der Betreiber 5 auf einfache Weise die Reihenfolge der Abarbeitung der die Fahrtroute 14, 14' bildenden Fahrstrecken 25, 26 ändern kann, ist die Anzeigeeinheit 2 als sogenannter Touch-Screen-Monitor 51 ausgeführt, sodass unmittelbar am Monitor 51 die nächste abzuarbeitende Fahrstrecke 25, 26 ausgewählt wird. Dies hat im Bereich der Vorgewendefahrt 36 insbesondere den Vorteil, dass der Betreiber 5 auf einfache Weise die Aufteilung des zu bearbeitenden Territoriums 21 in Teilflächen 28, 29 beeinflussen kann. Zudem können der Anzeigeeinheit 2 in an sich bekannter Weise Mittel zugeordnet sein, die dem Betreiber 5 die Möglichkeit geben, die ermittelte Fahrtroute 14, 14' im Ganzen oder einzelne Fahrstrecken 25, 26 dieser Fahrtroute 14, 14' auf dem abzuarbeitenden Territorium 21 zu verschieben, sodass mögliche Ungenauigkeiten in der Fahrtroutenermittlung auf einfache Weise ausgeglichen werden können.

Es liegt im Rahmen des Könnens eines Fachmanns das beschriebene Routenplanungssystem 1 in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Routenplanungssystem
- 2: Anzeigeeinheit
- 3: Mähdrescher
- 4: Arbeitsmaschine
- 5: Betreiber
- 6: Fahrerkabine
- 7: Getreideschneidwerk
- 8: Vorsatzgerät
- 9: GPS-Antenne
- 10: Berechnungsalgorithmus
- 11: Optimierungskriterium
- 12: arbeitsfahrzeugspez. Daten
- 13: feldspezifische Daten
- 14, 14': Fahrtroute
- 15: Monitor
- 16: Anzeigeeinheit
- 17: Speichereinheit
- 18: Lenkung
- 19: Räder
- 20: Auslenkung
- 21: Territorium
- 22: Getreidefeld
- 23: Außenkontur
- 24: Fahrtroute
- 25: Fahrstrecke
- 26: Fahrstrecke
- 27: Hindernis
- 28: erste Teilfläche
- 29: zweite Teilfläche
- 30: Fahrstrecke
- 31: Maschinen-Ist-Position
- 32: Maschinen-Soll-Position
- 33: Maschinen-Ist-Ausrichtung
- 34: Maschinen-Soll-Ausrichtung
- 35: Überladefahrzeug
- 36: Vorgewendefahrt
- 37: Wendebogen
- 38: Abtankeinrichtung
- 39: Ablaufschritt
- 40: Datenbank
- 41: Abarbeitungsschritt
- 42: Abarbeitungsschritt
- 43: Abarbeitungsschritt
- 44: Abarbeitungsschritt
- 45: Fahrtroutenoptimum
- 46: Masterlinie
- 47: virtuelle Verlängerung
- 48: Leitlinie
- 49: Berechnungsalgorithmus
- 50: unbearbeiteter Bestand
- 51: Touch-Screen-Monitor

- AB: Arbeitsbreite
- C: Wegpunkt
- D: Wegpunkt
- Z: Steuersignal

## Patentansprüche

1. Routenplanungssystem für landwirtschaftliche Arbeitsmaschinen, wobei der landwirtschaftlichen Arbeitsmaschine eine definierte Arbeitsbreite zur Generierung von Fahrtrouten in einem Territorium zugeordnet ist,
**dadurch gekennzeichnet,**
**dass** das Routenplanungssystem (1) eine dynamische Anpassung der geplanten Fahrtroute (14, 14') umfasst.

2. Routenplanungssystem für landwirtschaftliche Arbeitsmaschinen nach Anspruch 1,
**dadurch gekennzeichnet,**
**dass** die geplante Fahrtroute (14, 14') in Abhängigkeit von der Maschinen-Ist-Position (31) und der Maschinen-Ist-Ausrichtung (33) dynamisch angepasst wird.

3. Routenplanungssystem für landwirtschaftliche Arbeitsmaschinen nach einem der vorhergehenden Ansprüche,
**dadurch gekennzeichnet,**
**dass** die dynamische Anpassung der Fahrtroute (14, 14') permanent erfolgt.

4. Routenplanungssystem für landwirtschaftliche Arbeitsmaschinen nach einem der vorhergehenden Ansprüche,
**dadurch gekennzeichnet,**
**dass** die Fahrtroute (14. 14') aus einer Vielzahl von Fahrstrecken (25, 26) gebildet wird und die Fahrstrecken (25, 26) nach Optimierungskriterien (11) ermittelt werden.

5. Routenplanungssystem für landwirtschaftliche Arbeitsmaschinen nach einem der vorhergehenden Ansprüche,
**dadurch gekennzeichnet,**
**dass** die Wahl einer abzuarbeitenden nächsten Fahrstrecke (25, 26) von Optimierungskriterien (11) bestimmt wird.

6. Routenplanungssystem für landwirtschaftliche Arbeitsmaschinen nach Anspruch 5,
**dadurch gekennzeichnet,**
**dass** die Optimierungskriterien (11) "kürzeste Fahrstrecke / Bearbeitungszeit", "geringer Anteil unproduktiver Hilfszeiten", "kurze Hilfsfahrten zwischen aufeinanderfolgend abzuarbeitenden Fahrstrecken (25, 26)", "Wiedererkennung und Abarbeitung bereits bekannter Fahrtrouten (14,14') und
Bearbeitungsabläufe", "kurze Vorgewendefahrten (36)" und "Minimierung der Fahrten zwischen landwirtschaftlicher Arbeitsmaschine (3, 4) und Überladefahrzeug (35)" sein können.

7. Routenplanungssystem für landwirtschaftliche Arbeitsmaschinen nach einem der vorhergehenden Ansprüche,
**dadurch gekennzeichnet,**
**dass** der Betreiber (5) der landwirtschaftlichen Arbeitsmaschine (25, 26) die vorgewählte Fahrtroute (14) und/oder Fahrstrecke (25, 26) verwerfen und eine beliebige Fahrstrecke (25, 26, 30) wählen kann.

8. Routenplanungssystem für landwirtschaftliche Arbeitsmaschinen nach Anspruch 7,
**dadurch gekennzeichnet,**
**dass** bei Verwerfung der vorgewählten Fahrtroute (14) und/oder Fahrstrecke (25, 26) durch den Betreiber (5) der landwirtschaftlichen Arbeitsmaschine (4) das Routenplanungssystem (1) eine neue aus Fahrstrecken (25, 26) zusammengesetzte Fahrtroute (14') ermittelt.

9. Routenplanungssystem für landwirtschaftliche Arbeitsmaschinen, wobei der landwirtschaftlichen Arbeitsmaschine eine definierte Arbeitsbreite zur Generierung von Bearbeitungsfahrweg-Verläufen in einem Territorium zugeordnet ist,
**dadurch gekennzeichnet,**
**dass** das Routenplanungssystem eine Abarbeitungsstrategie ermittelt.

10. Routenplanungssystem für landwirtschaftliche Arbeitsmaschinen nach Anspruch 9,
**dadurch gekennzeichnet,**
**dass** die Abarbeitungsstrategie die Verknüpfung von parallelen Fahrstrecken (25, 26) und Wendebögen (37) ; die Einbeziehung der Anzahl und Position von weiteren auf dem zu bearbeitenden Territorium (21) eingesetzten landwirtschaftlichen Arbeitsmaschinen (3, 4) ; die Berücksichtigung der Maschinenkinematik (12), der Geometrie des zu bearbeitenden Territoriums (21), von Hindernissen (27) in dem zu bearbeitenden Territorium (21) ; die Berücksichtigung von Erntegutbedingungen (13) ; die Berücksichtigung von Kundenwünschen und die Abarbeitung vorgegebener Abarbeitungsabläufe umfasst.

11. Routenplanungssystem für landwirtschaftliche Arbeitsmaschinen nach zumindest einem der Ansprüche 9 oder 10,
**dadurch gekennzeichnet,**
**dass** das Routenplanungssystem (1) Fahrtrouten (14, 14') und Abarbeitungsstrategien für ein zu bearbeitendes Territorium (21) speichert und diese abgespeicherten Fahrtrouten (14, 14') und Abarbeitungsstrategien (14, 14') bei wiederholter Abarbeitung erkennt und selbsttätig auf diese hinterlegten Fahrtrouten (14, 14') und Abarbeitungsstrategien zugreift.

12. Routenplanungssystem für landwirtschaftliche Arbeitsmaschinen nach einem der vorhergehenden Ansprüche,
**dadurch gekennzeichnet,**
**dass** der von den Fahrstrecken (25, 26) gebildeten Fahrtroute (14, 14') eine Masterlinie (46) zugrunde liegt, wobei die auf die Masterlinie (46) rückbezogenen Fahrstrecken (25, 26) um annährend die Arbeitsbreite (AB) der landwirtschaftlichen Arbeitsmaschine (3, 4) oder ein Vielfaches davon zur Masterlinie (46) und zueinander versetzt generiert werden.

13. Routenplanungssystem für landwirtschaftliche Arbeitsmaschinen nach einem der Ansprüche 11 und 12,
**dadurch gekennzeichnet,**
**dass** die Masterlinie (46) geradlinig oder gekrümmt ausgebildet sein kann und wobei jede Masterlinie (46) aus zwei zueinander beabstandeten Wegpunkten (C, D) gebildet wird und die virtuelle Verlängerung (47) der durch diese Wegpunkte (C, D) verlaufenden Strecke der Masterlinie (46) als Leitlinie (48) dient.

14. Routenplanungssystem für landwirtschaftliche Arbeitsmaschinen nach einem der Ansprüche 11 bis 13,
**dadurch gekennzeichnet,**
**dass** die Masterlinie (46) vom Betreiber (5) der landwirtschaftlichen Arbeitsmaschine (3, 4) definiert wird.

15. Routenplanungssystem für landwirtschaftliche Arbeitsmaschinen nach Anspruch 13,
**dadurch gekennzeichnet,**
**dass** die Leitlinie (48) zur automatischen Führung der landwirtschaftlichen Arbeitsmaschine (3, 4) herangezogen wird.

16. Routenplanungssystem für landwirtschaftliche Arbeitsmaschinen nach einem der Ansprüche 11 bis 15,
**dadurch gekennzeichnet,**
**dass** die Anzahl der generierten Wegpunkte (C, D) gekrümmter Masterlinien (46) durch Abarbeitung eines Berechnungsalgorithmus (49) reduziert wird.

17. Routenplanungssystem für landwirtschaftliche Arbeitsmaschinen nach einem der vorhergehenden Ansprüche,
**dadurch gekennzeichnet,**
**dass** die ermittelten Fahrstrecken (25, 26) zunächst der Form von Außenkonturen (23) des zu bearbeitenden Territoriums (21) und/oder von in dem zu bearbeitenden Territorium (21) befindlichen Hindernissen (27) folgen und nachfolgend annähernd parallel zueinander verlaufen.

18. Routenplanungssystem für landwirtschaftliche Arbeitsmaschinen nach einem der vorhergehenden Ansprüche,
**dadurch gekennzeichnet,**
**dass** die Länge der Fahrstrecken (25, 26) durch die Außenkontur (23) des zu bearbeitenden Territoriums (21) oder der zu umfahrenden Hindernisse (27) bestimmt wird.

19. Routenplanungssystem für landwirtschaftliche Arbeitsmaschinen nach einem der vorhergehenden Ansprüche,
**dadurch gekennzeichnet,**
**dass** die Fahrstrecken (25, 26) der Fahrtroute (14, 14') virtuell soweit verlängert werden, dass die nach der Fahrstrecke (25, 26) bewegte landwirtschaftliche Arbeitsmaschine (3, 4) bei der Vorgewendefahrt (36) auf dem zu bearbeitenden Territorium (21) soweit aus dem Territorium (21) herausgeführt wird, dass ein Wenden der landwirtschaftlichen Arbeitsmaschine (25, 26) ohne Kontakt zu unbearbeitetem Bestand (50) möglich wird.

20. Routenplanungssystem für landwirtschaftliche Arbeitsmaschinen nach einem der vorhergehenden Ansprüche,
**dadurch gekennzeichnet,**
**dass** der endseitige Übergang von einer Fahrstrecke (25, 26) zu einer nächsten Fahrstrecke (25, 26) von einem durch einen errechenbaren Wendebogen (37) definierten Wendevorgang (36) bestimmt wird.

21. Routenplanungssystem für landwirtschaftliche Arbeitsmaschinen nach einem der vorhergehenden Ansprüche,
**dadurch gekennzeichnet,**
**dass** dem Betreiber (5) der landwirtschaftlichen Arbeitsmaschine (3, 4) zumindest an den Enden der jeweiligen Fahrstrecke (25, 26) die weiteren Fahrstrecken (25, 26) angezeigt werden, wobei der Betreiber (5) die nächste abzuarbeitende Fahrstrecke (25, 26) auswählen kann und das Routenplanungssystem (1) den Wendebogen (37) zu dieser Vorgewendefahrt (36) selbsttätig ermittelt und der Wendebogen aus einer Vielzahl von Fahrstrecken (25, 26) gebildet werden kann.

22. Routenplanungssystem für landwirtschaftliche Arbeitsmaschinen nach Anspruch 20,
**dadurch gekennzeichnet,**
**dass** der Betreiber (5) die Fahrstrecke (25, 26) durch Bedienung eines Touch-Screen-Monitors (51) auswählen kann.

23. Routenplanungssystem für landwirtschaftliche Arbeitsmaschinen nach einem der vorhergehenden Ansprüche,
**dadurch gekennzeichnet,**
**dass** die ermittelten Fahrstrecken (25, 26, 37) durch den Bediener (5) der landwirtschaftlichen Arbeitsmaschine (3, 4) verschoben werden können.
